# EUROPEAN PATENT SPECIFICATION

(11) **EP 3 559 074 B1**
(45) Date of publication and mention of the grant of the patent: **06.11.2024**
(21) Application number: 17821587.7
(22) Date of filing: 19.12.2017
(51) Int. Cl.: C08G 18/76, C08G 18/79, C04B 24/28, C04B 28/00, C04B 7/34, C08G 18/30, C08G 18/32, C08G 18/36, C04B 7/00, C08G 18/48, C08G 18/69, C08G 18/72, C08G 18/10, C04B 26/16, C04B 28/02, C04B 111/60

(54) **FLEXIBLE POLYURETHANE CEMENTITIOUS HYBRID COMPOSITION**
FLEXIBLE HYBRIDES ZEMENTÖSE POLYURETHANZUSAMMENSETZUNG
COMPOSITION HYBRIDE POLYURÉTHANE SOUPLE À BASE DE CIMENT

(30) Priority: 21.12.2016 EP 16205787
(43) Date of publication of application: 30.10.2019
(73) Proprietor: Sika Technology AG, 6340 Baar (CH)
(72) Inventor: KADDATZ, Carola, 71570 Oppenweiler (DE); GIMENO SANTOS, Patricia, 70186 Stuttgart (DE); WILLMANN, Jörg, 70180 Stuttgart (DE)
(74) Representative: Sika Patent Attorneys
(86) International application number: PCT/EP2017/083448
(87) International publication number: WO 2018/114890

(56) References cited:
- EP-A1- 2 944 622
- WO-A2-2014/174033
- JP-A- H08 169 744

## Description

### Technical field

The invention relates to polyurethane cementitious hybrid flooring materials, in particular for the manufacture of industrial flooring or car park flooring.

### Background of the invention

Today there exist several requirements for floor covering systems, especially for industrial flooring and car park flooring.

Among other properties, especially flexibility is required for industrial floors nowadays, in particular, when designing large concrete slabs in order to bridge the minimum crack width (usually 0.2 to 0.4 mm). Large floor areas also require the system to be cost effective, resulting in low prices for the resin.

Furthermore, specific legislation for industrial flooring such as water protection law of German speaking countries (WHG § 19) requests flexibility among high abrasion and chemical resistance. Car park floorings require as well high abrasion resistance, but also crack bridging properties and especially, for ground bearing slabs, the resistance to upcoming moisture.

Epoxy or polyurethane resins are typically used for such flooring applications. However, increased flexibility in traditional epoxy or polyurethane resin also means a loss of abrasion and chemical resistance. Thus, a compromise has to be established for achieving good results for both properties.

Rigid industrial epoxy systems have no-crack bridging properties and offer therefore a high abrasion resistance, but are susceptible for cracking.

Often, the filler/resin ratio (filling ratio) is increased to the maximum for cost concerns, but a loss in application speed results therefrom. Further, car park solutions for ground bearing slabs often show blistering when crack-bridging properties are required at the same time. Additionally, crack-bridging car park solutions are also weak in abrasion resistance offering a life span of less than five years, when the flooring is highly trafficked.

Thus, there is a demand for flooring systems, especially industrial flooring and car park flooring, which provide a compromise between conflicting requirements, like chemical resistance vs. crack-bridging properties, moisture tolerance vs. flexibility, abrasion resistance vs. crack-bridging properties, impact resistance vs. costs as well as application speed vs. costs. At the same time the compromise is also a compromise in performance affecting the operating life.

EP 2944622 A1 relates to a three component composition for the manufacture of polyurethane cementitious hybrid flooring or coating with improved surface gloss consisting of a polyol component (A) comprising at least two polyols and water, a polyisocyanate component (B) comprising a methylene diphenyl diisocyanate product with an average NCO functionality of at least 2.5, or a methylene diphenyl diisocyanate product with an average NCO functionality of at least 2 and at least one further polyol with an amount of between 1 % and 30% based on the weight of said polyisocyanate component (B), wherein said MDI product and said polyol have reacted at least partially, and a powder component (C) comprising at least one hydraulic binder and optionally one or more aggregates.

WO 2014/174033 A2 describes a three component composition for flooring applications comprising a component (A) including calcined paper sludge and aggregates, a component (B) including a binder selected from polyol, epoxy resin and polymer latex dispersion, and a component (C) including a isocyanate hardener.

JP H08-169744 A describes a cement composition comprising a hydraulic binder such as cement and a combination of an active hydrogen containing compound such as castor oil and an isocyanate compound such as MDI.

### Summary of the invention

Therefore, the object of the invention was to overcome the problems of the prior art discussed above, in particular to provide a flooring material that offer compromises between the conflicting requirements as mentioned above. In particular, the flooring material should combine superior crack bridging properties with high chemical abrasion and impact resistance.

The floor coverings should further enable a good compromise between conflicting requirements, such as a high filling ratio, which makes the system cost-effective, easy application in one layer, moisture tolerance and being applicable onto ground bearing slabs.

Surprisingly, this object could be achieved by providing a multi-component composition for the manufacture of polyurethane cementitious hybrid flooring in which a particular polyisocyanate component is used.

Accordingly, the present invention relates to a multi-component composition according to claim 1.

The inventive multi-component composition surprisingly provides improved crack-bridging properties with high chemical, abrasion and impact resistance being maintained. It enables high filling ratio (filler to resin ratio) to reduce costs without affecting ease of application. In addition, the multi-component composition is moisture tolerant and exhibits surprising water proofing properties so that is can be applied onto ground bearing slabs.

Further, the multi-component composition of the invention is advantageous because no blistering at low temperatures occurs as in the case of conventional polyurethane resins. Additionally, shorter curing times can be achieved so that the flooring produced therewith can be used after 24 hours. These benefits result in faster operation and cost effective preparation.

Moreover, the multi-component composition of the invention is characterized by low shrinkage so that it can be used without cutting any anchor grooves and advantageous crack-bridging properties so that it is particular suitable for flooring of car parks. Better physical properties, when being used as a repair mortar, and advantageous waterproofing properties, when being used as a liquid membrane, are also provided.

The multi-component composition shows good fire resistant properties so that it can be classified as Bfl according to EN 13501-1. Moreover, the multi-component composition does not show amine blushing which is a common problem with epoxy resins.

Therefore, the inventive multi-component composition enables the provision of a floor covering, in particular industrial flooring and car park flooring, showing improved crack bridging properties with high chemical, abrasion and impact resistance.

The invention also relates to a method for preparing a flooring or coating with the multi-component composition. In a further embodiment, the invention provides the flooring obtainable by the method of the invention, in particular an industrial floor or a car park floor.

The invention also refers to the respective use of the multi-component composition as a flooring material, for car park floors or industrial floors.

### Detailed description of the invention

Substance names beginning with "poly", such as e.g. polyol or polyisocyanate, designate substances which formally contain, per molecule, two or more of the functional groups occurring in their names.

The average molecular weight is understood to mean the number average molecular weight, as determined using conventional methods, preferably by gel permeation-chromatography (GPC) using polystyrene as standard (Mw), styrene-divinylbenzene gel with porosity of 100 Angstrom, 1000 Angstrom and 10000 Angstrom as the column and tetrahydrofuran as a solvent, at 35°C.

The term "cementitious" refers to compositions including hydraulic binding agent such as cement and to the cured products thereof.

At first, the multi-component composition used according to the invention is explained. The multi-component composition comprises three or more individual components. The components are stored separately in order to avoid spontaneous reaction. The components may be assembled together as a package. For use the components are mixed with each other. The multi-component composition preferably consists of three components. Optionally however, one or more additional components may be included for specific purposes. For instance, an additional component comprising coloring agents, such as pigments, may be used for coloring purposes.

### Polyol component (A)

The polyol component comprises one or more polyols, and water. Optionally, one or more additives may be added to the polyol component. The polyol component is preferably a liquid component. The polyol component may be viscous but is generally pourable.

The one or more polyols are preferably a diol and/or a triol, wherein diols are preferred.

Examples of suitable polyols are polyoxyalkylenepolyols, also referred to as "polyetherpolyols", polyesterpolyols, polycarbonatepolyols, poly(meth)acrylate polyols, polyhydrocarbon-polyols, hydroxyl-terminated polybutadienes, polyhydroxy-functional acrylonitrile/butadiene copolymers and mixtures thereof, in particular diols thereof, and mixtures thereof.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Polyoxyalkylenediols or polyoxyalkylenetriols having a degree of unsaturation of less than 0.02 meq/g and having an average molecular weight in the range from 1000 to 30000 g/mol and polyoxyethylenediols, polyoxyethylenetriols, polyoxypropylenediols and polyoxypropylenetriols having an average molecular weight of from 400 to 8000 g/mol are suitable.

Further examples of polyetherpolyols are so-called ethylene oxide-terminated ("EO-endcapped", ethylene oxide-end-capped) polyoxypropylenepolyols, styrene-acrylonitrile-grafted polyetherpolyols, e.g. Lupranol^{®} from BASF Polyurethanes GmbH, Germany.

Particularly preferred polyols to be used in the present invention are polyhydroxy-functional fats and oils, for example natural fats and oils, such as castor oil, or polyols obtained by chemical modification of natural fats and oils, so-called oleochemical polyols. It is particularly preferred that the polyol component comprises castor oil as polyol.

Examples of chemically modified natural fats and oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and oils by degradation processes, such as alcoholysis or ozonolysis, and subsequent chemical linkage, for example by transesterification or dimerization, of the degradation products thus obtained or derivatives thereof. Suitable degradation products of natural fats and oils are in particular fatty acids and fatty alcohols and fatty acid esters, in particular the methyl esters (FAME), which can be derivatized, for example, by hydroformylation and hydrogenation to give hydroxy-fatty acid esters.

The polyols mentioned above usually have a relatively high molecular weight, for instance, an average molecular weight of from 250 to 30000 g/mol, in particular from 1000 to 30000 g/mol, and/or an average OH functionality in the range from 1.6 to 3.

Further examples of suitable polyols are low molecular weight di- or polyhydric alcohols, e.g., with a molecular weight of less than 250 g/mol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

While said low molecular weight di- or polyhydric alcohols may be used as the polyol, the use of the polyols mentioned above having a high molecular weight is preferred. In a preferred embodiment at least one high molecular weight polyol and at least one low molecular weight di- or polyhydric alcohol are used in combination. As mentioned, a low molecular weight polyol is considered to have a molecular weight of less than 250 g/mol, whereas a high molecular weight polyol is considered to have an average molecular weight of 250 g/mol or more.

In a preferred embodiment the polyol component comprises at least one high molecular weight polyol, in particular castor oil, optionally in combination with at least one low molecular weight polyol.

Particularly preferred is a combination of one or more polyhydroxy-functional fats and oils, such as natural fats and oils, or polyols obtained by chemical modification of natural fats and oils, in particular castor oil, and one, two or more low molecular weight di- or polyhydric alcohols. In such combinations, the one or more polyols having a high molecular weight are usually used in higher amounts than the at least one low molecular weight di- or polyhydric alcohol.

The polyol component further comprises water.

Apart from the at least one polyol and water, the polyol component may contain further additives. Such additives are commonly used, if desired, and typically known to the persons skilled in the art. Examples of further optional additives are plasticizers, pigments, adhesion promoters, such as silanes, e.g. epoxysilanes, (meth)acrylatosilanes and alkylsilanes, stabilizers against heat light and UV radiation, thixotropic agents, flow improving additives, flame retardants, surface active agents such as defoamers, wetting agents, flow control agents, deaerating agents, biocides and emulsifiers.

Preferably used optional additives for the polyol component are one or more of plasticizers, such as benzoates, benzyl phthalates, e.g. Santicizer^{®}160, and diisopropylbenzene, e.g. Benzoflex^{®}9-88; pigments, such as inorganic and organic pigments, e.g. Bayferrox^{®} and Heucosin^{®}; defoamers, such as solvent free and silicon free defoamers, e.g. solvent free and silicon free polymer-based defoamers, and polyorganosiloxanes, e.g. Tego^{®}Airex and Efka^{®}; and emulsifiers such as calcium hydroxide.

### Polyisocyanate component (B)

The polyisocyanate component (B) comprises hexamethylene diisocyanate (HDI) and an isocyanate-functional polyurethane prepolymer of at least one polyol and methylene diphenyl diisocyanate (MDI), or HDI and MDI.

In one embodiment, the polyisocyanate component (B) comprises hexamethylene diisocyanate (HDI) and methylene diphenyl diisocyanate (MDI). In another embodiment the polyisocyanate component (B) comprises hexamethylene diisocyanate (HDI) and the isocyanate-function polyurethane prepolymer.

Commercial products of polyisocyanates are often oligomeric or polymeric forms and/or are converted into derivatives of the polyisocyanate e.g. in order to reduce toxic hazard. All of these forms can be used.

The HDI used is selected from momomeric HDI, HDI biurets, HDI isocyanurates, HDI trimer, allophanate derivatives of HDI, uretdione dimer of HDI or mixtures thereof.

The MDI used in the combination of HDI and MDI or as starting material for the isocyanate-functional polyurethane prepolymer can be e.g. a monomeric methylene diphenyl diisocyanate or a polymeric methylene diphenyl diisocyanate or a mixture thereof.

Monomeric MDI refers to "pure" MDI including products of a single MDI isomer or of isomer mixtures of two or three MDI isomers. The isomeric ratio can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI includes oligomeric species. Usually MDI isomers are also included in polymeric MDI. Thus, polymeric MDI may contain a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain 30 to 80 wt.-% of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid at room temperature (23°C).

The oligomeric species are oligomers usually having a NCO-functionality of 3 or higher. The oligomeric species are a result of the synthesis process and can be presented by the following formula: 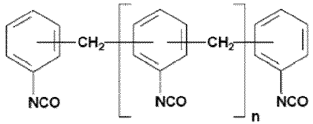 wherein n is 1 to 4 and higher. The amount of the homologs decreases with increased chain length. The total content of homologs with n higher than 4 is generally not very high.

A prepolymer is a polymer having reactive groups which are precursors capable of entering through the reactive groups into further polymerization, e.g. by chain extension.

The isocyanate-functional polyurethane prepolymer of at least one polyol and MDI used in the invention is obtainable by reaction of at least one polyol and MDI. The NCO equivalent weight of the isocyanate-functional polyurethane prepolymer is e.g. in the range of 180 to 1500 g/eq, preferably 200 to 1000 g/eq, and more preferably 220 to 600 g/eq. The NCO equivalent weight represents the weight of prepolymer in g per one equivalent of NCO groups. For preparing a prepolymer having a desired NCO equivalent weight, the polyols and MDI are reacted in a certain ratio. This ratio can be calculated based on the desired NCO equivalent weight of the product as well as OH equivalent weights and NCO equivalent weights of the starting materials. The skilled person is familiar with this calculation.

One or more polyols may be used for preparing the isocyanate-functional polyurethane prepolymer. Examples of suitable polyols are the same polyols mentioned above with respect to the polyol component (A) so that reference is made thereto. The polyol is preferably a polyether polyol, in particular a polypropylene ether polyol, a hydroxyl-terminated polybutadiene or a polyester polyol, in particular those mentioned above with respect to polyol component (A).

Methods for preparing isocyanate-functional polyurethane prepolymers and suitable conditions are well known to the skilled person in the field of polyurethane synthesis.

The polyisocyanate component (B) may optionally comprise a catalyst. All catalysts common for polyurethane preparation can be used. The catalyst is preferably a catalyst containing tin, in particular an organic tin catalyst. Specific examples are dibutyl tin laurate (DBTL), dibutyl tin dichloride and dibutyltindiacetylacetonate (DBTDAcAc). Further examples for suitable catalysts are amines, in particular tertiary amines, such as 1,4-diazabicyclo[2.2.2]octan (DABCO), and organic metal compounds such as e.g. organic titanium compounds, organic bismuth compounds and organic zinc compounds.

The amount of catalyst in polyisocyanate component (B) may be e.g. in the range of 0.05 to 5% by weight, preferably 0.1 to 2% by weight, based on the weight of the polyisocyanate component (B).

The polyisocyanate component (B) may optionally comprise one or more further additives, e.g. solvents. Additives such as solvent are preferably used in relatively small amounts, if used, e.g. not more than 20 wt.-% or not more than 10 wt.-%, preferably not more than 5 wt.-% of additives altogether, based on the total weight of the polyisocyanate component (B). Suitable solvents include but are not limited to esters, ketones, hydrocarbons and chlorinated hydrocarbons.

### Powder component (C)

The powder component comprises one or more hydraulic binding agents and one or more aggregates.

A hydraulic binding agent is a substantially inorganic or mineral material or blend, which hardens when mixed with water. Hydraulic binders also encompasses latent hydraulic binders or pozzolanic binders which usually requires activation, e.g. by the presence of lime, in order to show hydraulic properties. All hydraulic binders known to those skilled in the art are suitable.

Typical examples of hydraulic binders are at least one of cement, e.g. Portland cement, fly ash, granulated blast furnace slag, lime, such as limestone and quicklime, rice husk, calcined paper sludge, fumed silica and pozzolana or a mixture thereof. The hydraulic binder preferably comprises cement, in particular Portland cement. Hydraulic binders such as cement often include in addition calcium sulfate, such as gypsum, anhydrite and hemihydrate.

The powder component further comprises one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, calcined flint, lightweight aggregates such as clay, pumice, perlite, and vermiculite. Sand, in particular silica sand, is preferably used to reach the workability expected and to obtain a smooth surface.

The grain size of the aggregates may vary depending on the application, but is preferably rather small, e.g. not more than 6 mm, preferably not more than 4 mm. The aggregate may have, for instance, a grain size in the range of 0.05 to 4 mm, preferably 0.1 to 3 mm, wherein sand, in particular silica sand, having a grain size in the range of 0.1 to 3 mm, is particularly preferred. For instance, sand having a grain size ranging from 0.3 to 0.8 mm or from 0.1 to 0.5 mm can be advantageously used in the present invention. The grain size range can be determined, e.g. by sieve analysis.

In a preferred embodiment, the powder component also includes calcium hydroxide and/or calcium oxide, e.g. hydrated lime (Ca(OH)₂) and/or quicklime (CaO).

The powder component may optionally comprise one or more additives, which are commonly used, if desired, and typically known to the persons skilled in the art of cementitious applications. Examples of suitable additives, which may be optionally used in the solid component are superplastizicer such as polycarboxylate ether (PCE), oil such as mineral oil, paraffin oil and organic oil, cellulose fibers, and inorganic or organic pigments.

### Suitable proportions for the multi-component composition

As to the mixing ratio of the components of the multi-component composition, the weight ratio of components (A) : (B) : (C) is preferably 1-1.2 : 1-0.85 : 1-5.

The polyol component (A) is preferably formulated such that the water content is in the range of 10 to 40% by weight, preferably 20 to 30% by weight, and/or the content of the one or more polyols, preferably including castor oil, is 35 to 55% by weight, preferably 38 to 50% by weight, based on the total content of the polyol component (A).

In a preferred embodiment at least one high molecular weight polyol, preferably castor oil, and at least one low molecular polyol are contained in the polyol component (A). In this case, the content of the high molecular weight polyol, such as castor oil, is e.g. in the range of 33 to 45% by weight, and the content of low molecular weight polyol is e.g. in the range of 2 to 10% by weight, based on the total content of polyol component (A).

Further, the multi-component composition is preferably formulated such that the isocyanate component (B) comprises 80 to 100% by weight, preferably 90 to 100% by weight, of HDI and MDI or 80 to 100% by weight, preferably 90 to 100% by weight, of HDI and the isocyanate-functional polyurethane prepolymer.

When a combination of HDI and MDI or a combination of HDI and polyurethane prepolymer is used in the polyisocyanate component (B) the ratio of HDI : MDI or HDI : isocyanate-functional polyurethane prepolymer is preferably in the range from 10 : 90 to 90 : 10, more preferably 30:70 to 70:30 and still more preferably 60:40 to 40:60.

The multi-component composition is preferably formulated such that the content of the one or more hydraulic binding agent, preferably comprising cement, is in the range of 5 to 50% by weight, preferably in the range of 10 to 25% by weight, based on the total weight of component (A), component (B) and component (C). Said content of the one or more hydraulic binding agent also includes the weight of calcium hydroxide and/or calcium oxide, if present. The content of the polyisocyanates is e.g. in the range of 5 to 40% by weight, based on the total weight of component (A), component (B) and component (C). The amount of the one or more hydraulic binding agent is preferably 20 to 50% by weight, more preferably 30 to 45% by weight, based on the total weight of component (C). The component (C) comprises e.g. 40 to 80% by weight of aggregates, preferably sand, based on the total weight of said component.

Further, the multi-component composition is preferably formulated such that the weight ratio of water to the one or more hydraulic binding agent is in the range of 0.30 to 0.75, preferably in the range of 0.35 to 0.70, based on the total weight of component (A), component (B) and component (C).

An advantage of the inventive multi-component composition is that a high filling ratio is possible without affecting the properties such as curing properties to a large extent. The filling ratio is the ratio of the amount of component (C) to the sum of the amounts of component (A) and component (B), i.e. the weight ratio of (C) : [(A) + (B)]. The filling ratio can be e.g. in the range of 2.7 : 1 to 0.45 : 1, preferably 1 : 1 to 0.5 : 1.

In another preferable embodiment, the component (A) comprises castor oil as polyol, component (B) comprises a combination of HDI and MDI as polyisocyanates and/or component (C) comprises cement as hydraulic binding agent, wherein the weight ratio of HDI : MDI is preferably in the range of 60 : 40 to 40 : 60.

The molar ratio of NCO groups to alcoholic OH groups (NCO/OH ratio) in the whole multi-component composition is preferably in the range of from 3 to 5 and more preferably in the range of from 3.5 to 4.5. Said molar ratio further improves compressive strength of the finished product. The molar ratio can easily be determined via the equivalent weights of the polyols and polyisocyanates used.

### Mixture

For using the multi-component composition e.g. as a coating for industrial floors or car parks, the components of the composition are mixed before usage.

When the components are mixed together, hydration and curing reactions begin so that the composition is to be processed within the open time after mixing the components. The term "open time" is understood to mean the duration of processability when the components are mixed with each other. The end of the open time is usually associated with viscosity increase of the composition such that processing of the compositions is no longer possible. In a preferred embodiment, firstly, the polyol component (A) and the polyisocyanate component (B) are mixed. Thereafter, the powder component (C) is added to the mixture of component (A) and (B) and mixed, to obtain a mixed material.

When the components are mixed, the one or more hydraulic binding agent reacts with water. This reaction is generally called hydration. Upon the reaction with water, the hydraulic binding agent is cured to a solid material. Moreover, the one or more polyols of the polyol component (A) and the one or more polyisocyanates of the isocyanate component (B) react upon mixture so that a polyurethane as an organic binder is also cured. Thus, upon curing a hybrid solid material comprising an inorganic portion and an organic portion in which the aggregates are bound is formed.

### Method for the manufacture of the floor covering

The invention also relates to the method for the manufacture of a polyurethane cementitious hybrid flooring or coating with the multi-component composition, wherein the method comprises a) mixing polyol component (A) and polyisocyanate component (B), b) adding the powder component (C) to the mixture of polyol component (A) and polyisocyanate component (B) and mixing, to obtain a mixed material, c) applying the mixed material to a substrate, d) optionally smoothing the applied mixed material, and e) curing the applied mixed material, to obtain the polyurethane cementitious hybrid flooring or coating.

In a preferred embodiment, the method is used to prepare an industrial floor or a car park floor.

Examples of suitable substrates on which the multicomponent composition can be applied are a screed floor, a concrete floor, a cement floor or slabs, in particular ground bearing slabs. The screed floor may be e.g. a cementitious screed or a polymer modified cementitious screed. The substrate may also be an existing flooring such as a resin coated flooring or any other known floor covering. The substrate is preferably formed of slabs, in particular ground bearing slabs.

The application of the multicomponent composition may be carried out by any common method, e.g. coating, spraying, casting, grouting, puttying. The flooring obtained may have e.g. a thickness of 1.5 to 9 mm.

The application temperature for the multi-component composition, is e.g. from about 8 to 40°C, preferably from about 12 to 35°C.

The invention also relates to the flooring, preferably industrial floor or car park floor, obtainable by the method of the invention. The invention also relates to the use of the multi-component composition as a flooring material for car park floors or industrial floors.

The floor covering obtained has an improved chemical, abrasion and impact resistance so that it is suitable for places under severe conditions. It shows excellent crack-bridging properties and good water-proofing properties so that it exhibits good resistance to upcoming moisture. The floor covering of the invention is particularly suitable as an industrial floor covering and car park floor, especially when slabs or ground bearing slabs are the underground or substrate on which the floor is to be applied.

The invention is further explained in the following experimental part which, however, shall not be construed as limiting the scope of the invention. The proportions and percentages indicated are by weight, unless otherwise stated.

### Examples

The following commercial products were used in the examples:

| BYK^{®}-057 | Silicon-free defoamer | BYK-Chemie GmbH, Wesel, Germany |
|---|---|---|
| CITROFOL^{®} BII | Tributyl-O-acetylcitrate plasticizer | Jungbunzlauer Suisse AG, Basel |
| DESMODUR^{®} N 3600 | Polyfunctional aliphatic polyisocyanate resin based on HDI | Bayer MaterialScience LLC, Pittsburgh, USA |
| Desmodur^{®} LS 2424 | Monomeric diphenylmethane diisocyanate with high 2,4'- isomer content | Bayer MaterialScience AG, Leverkusen, Germany |
| Efka^{®} SI 2723 | Defoaming agent containing silicone | BASF SE, Ludwigshafen, Germany |
| Heucosin^{®} Grau G 7748 N (RAL 7032) | Pigment | Heubach GmbH, Langelsheim, Germany |
| Irganox^{®} 1010 | Phenolic primary antioxidant | BASF Schweiz AG, Plastic Additives, Basel, Switzerland |
| Lupranat^{®} MI | Mixture of 2,4'- and 4,4'-MDI | BASF Polyurethanes GmbH, Lemförde, Germany |
| Quartz sand GEBA/BCS 413 | Quartz sand with a grain size in the range from 0.06 to 0.03 mm | Quarzwerke Osterreich GmbH, Melk, Austria |
| Sikafloor^{®} PurCem Matt | Three-component polyurethane cement hybrid, isocyanate component: MDI | SIKA Schweiz AG, Switzerland |
| Sikafloor^{®}-300 | Two-component polyurethane resin | Sika Deutschland GmbH, Stuttgart, Germany |
| Sikafloor^{®}-326 | Two-component polyurethane resin | Sika Deutschland GmbH, Stuttgart, Germany |
| Sikafloor^{®}-359 | Two-component polyurethane resin | Sika Deutschland GmbH, Stuttgart, Germany |
| Sikafloor^{®}-378 | Two-component epoxy resin | Sika Deutschland GmbH, Stuttgart, Germany |
| Sikafloor^{®} 40 HyCem | Two-component acrylic cement hybrid | SIKA Schweiz AG, Switzerland |
| Sikafloor^{®} 42 HyCem | Two-component acrylic cement hybrid | SIKA Schweiz AG, Switzerland |
| SR^{®} 81 EpoCem | Three-component epoxy mortar on a cement basis | SIKA Schweiz AG, Switzerland |
| SR^{®} 21 PurCem | Polyurethane screed, three-component polyurethane cement hybrid, isocyanate component: MDI | SIKA Schweiz AG, Switzerland |
| UVINOX 1494 | 2,6-Di-tert.-butyl-4-nonylphenol | RHODIA Operations, Aubervilliers Cedex, France |
| Valderrivas BL CEM I 52.5R | Portland cement | Cementos Portland Valderrivas S.A., Pamplona, Spain |

### Example 1 (Reference example)

A polyol component (A), a polyisocyanate component (B) and a powder component (C) were prepared with the ingredients and weight portions given in Table 1 below. The NCO equivalent weight of component (B) was 183.5 g/eq. For preparing a mixed material, a mixing ratio of the components (A) : (B) : (C) of 1 : 1 : 1.5 is used.

**Table 1: all values in parts by weight**

| Ingredients | Component (A) | Component (B) | Component (C) |
|---|---|---|---|
| Castor Oil | 40 | | |
| Plasticizer | 20 | | |
| Glycol | 5 | | |
| Additive | 4 | | |
| Pigment | 6 | | |
| Water | 25 | | |
| DESMODUR^{®} N 3600 | | 99.5 | |
| Catalyst | | 0.5 | |
| Cement* | | | 37 |
| Quartz sand | | | 63 |

| | | | |
|---|---|---|---|
| * Instead of cement calcined paper sludge or a mixture of cement and calcined paper sludge can be used | | | |

### Example 2 (Reference example)

The multi-component composition was prepared like in Example 1, but the mixed material is prepared with a mixing ratio of the components (A) : (B) : (C) of 1 : 0.8 : 3.

### Example 3

The multi-component composition was prepared like in Example 1, except that the 99.5 parts by weight of DESMODUR^{®} N 3600 were replaced by 99.5 parts by weight of a mixture composed of 50 wt.-% DESMODUR^{®} N 3600 and 50 wt.-% Lupranat^{®} MI (mixing ratio of HDI : MDI of 50 : 50). The NCO equivalent weight of component (B) was 154.4 g/eq. The mixing ratio of the components (A) : (B) : (C) was 1 : 1 : 1.5.

### Example 4 (Reference example):

The composition of Example 4 was prepared with an isocyanate-functional polyurethane prepolymer (MDI-based prepolymer) as polyisocyanate of component (B). The ingredients of the multi-component composition as well as the weight portions are listed below in Table 2. The mixing ratio of the components (A) : (B) : (C) was 1 : 1 : 1.5.

### Preparation of prepolymer 1 (PP1):

For the formation of the MDI-based prepolymer of Example 4 53.000 parts by weight of Lupranat^{®} MI was mixed with 46.998 parts by weight of a polypropylene ether polyol (hydroxyl number of about 55 mg KOH/g and OH equivalent weight of about 1000 g/eq.). As a catalyst 0.002 parts by weight of phosphoric acid (85%) were added. The mixture was reacted at a temperature of 40°C for a period of 12 hours. The NCO equivalent weight of the prepolymer obtained was 267.3 g/eq.

**Table 2: all values in parts by weight**

| Ingredients | Component (A) | Component (B) | Component (C) |
|---|---|---|---|
| Castor oil | 40.781 | | |
| Citrofol BII | 19.9 | | |
| Ethylene glycol | 4.975 | | |
| EFKA SI 2723 | 2.985 | | |
| Heucosin Grau G 7748N | 5.97 | | |
| Dimethylethanolamine (DMEA) | 0.015 | | |
| Water | 24.876 | | |
| BYK-057 | 0.498 | | |
| PP1 | | 100 | |
| Valderrivas BL CEM I 52.5 R | | | 37 |
| Quartz sand (0.06-0.3 mm, GEBA/BCS 413) | | | 63 |

### Example 5 (Reference example):

The composition of Example 5 was prepared like in Example 4, however, the isocyanate-functional polyurethane prepolymer PP1 of component (B) was replaced by the following prepolymer 2 (PP2). The mixing ratio of the components (A) : (B) : (C) was 1 : 1 : 1.5.

### Preparation of prepolymer 2 (PP2):

For the formation of the MDI-based prepolymer 40.000 parts by weight of Lupranat^{®} MI was mixed with 59.998 parts by weight of a polypropylene ether polyol (hydroxyl number of about 28 mg KOH/g and OH equivalent weight of about 2000 g/eq). As a catalyst 0.002 parts by weight of phosphoric acid (85%) was added. The mixture was reacted at a temperature of 40°C for a period of 12 hours. The NCO equivalent weight of the prepolymer obtained was 348.0 g/eq.

### Example 6 (Reference example):

The composition of Example 6 was prepared like in Example 4, however, the isocyanate-functional polyurethane prepolymer PP1 of component (B) was replaced by the following prepolymer 3 (PP3). The mixing ratio of the components (A) : (B) : (C) was 1 : 1 : 1.5.

### Preparation of prepolymer 3 (PP3):

For the formation of the MDI-based prepolymer 60.6 parts by weight of a hydroxyl terminated polymer of butadiene (with a hydroxyl number of 47.1 mg KOH/g) was mixed with 36.9 parts by weight of Desmodur^{®} LS 2424. Further, 1 part by weight of Irganox^{®} 1010 and 1.5 parts by weight of UVINOX 1494 were added. The mixture was reacted to obtain the prepolymer.The NCO equivalent weight of the prepolymer obtained was 421.4 g/eq.

### Example 7: Investigation of flexibility properties

The properties of the multi-component compositions were tested according to the methods mentioned below. Commercial products suitable for flooring applications were tested in the same way for comparison, wherein the commercial products were used according to the operating instructions given for each commercial product. The results are shown in Table 3.

Tensile strength (after 7 days): The tensile strength was determined according to ASTM C 307.

Elongation at break (after 7 days): The elongation at break was determined according to DIN 1048-5.

Shore D and Shore A: The Shore hardness was determined according to ASTM D 2240.

**Table 3:**

| | Tensile strength [N] | Elongation at break [%] | Shore D | Shore A |
|---|---|---|---|---|
| Example 1 | 5 | 43 | 20 | 76 |
| Example 2 | 4 | 15 | 37 | 93 |
| Example 3 | 11 | 4 | 53 | 95 |
| Example 4 | 5 | 28 | 25 | 88 |
| Example 5 | 2.5 | 34 | 45 | 95 |
| Example 6 | 2 | 89 | 15 | 65 |
| Sikafloor^{®} PurCem Matt | 8.5 | 0.4 | 80 | n.d. |
| Sikafloor^{®} 326 | 7.5 | 48 | 52 | n.d. |
| Sikafloor^{®} 300 | 6 | 67 | 35 | n.d. |
| Sikafloor^{®} 359 | 16 | 32 | 40 | n.d. |
| Sikafloor^{®} 378 | 21 | n.d. | 70 | n.d. |

| | | | | |
|---|---|---|---|---|
| n.d. = not determined | | | | |

### Example 8

Further properties of the multi-component compositions according to Example 1 were tested according to the methods mentioned below and compared with commercial products suitable for flooring applications, wherein the commercial products were used according to the operating instructions given for each commercial product. The results are shown in Table 4.

Compressive strength: The compressive strength was determined according to EN 13892-2 (DIN EN 196-1) after 28 days of curing at 23°C/ 50% relative humidity.

Flexural strength: The flexural strength was determined according to EN 13892-2 (DIN EN 196-1) after 28 days of curing at 23°C/ 50% relative humidity.

Bond strength: The bond strength was determined according to ASTM D 4541.

Taber abrasion: The Taber abrasion was determined according to EN ISO 5470-1.

impact resistance: The impact resistance was determined according to EN ISO 6272-1.

Tensile strength: see Example 7.

Extension: The Extension was determined according to DIN EN ISO 527-2.

Crack bridging properties: The crack bridging properties were determined according to UNE EN 1062-7.

Working time: The working time was determined according to the following method:
The respective components must be each at a temperature of 20°C ± 2°C before mixing. The components are mixed and the testing material obtained is then poured onto a test surface. The time measurement is started immediately after the pouring step. After selected time intervals, which depend on the individual product to be tested, a line is scratched into the screed in the full depth of the applied material and the healing of the surface was investigated. After a certain period of time, the line in the screed will be more and more visible, until eventually there is no re-joining of the edges, which are formed by the scratched line. At the specific time where a visible mark remains, even though the edges have joined, the working time is reached.

Workability: The workability refers to flow/ consistency which are determined at 23°C/ 50% relative humidity using the cone as described in DIN EN 1015-3, but without tamping the material. The cone is set on the glass sheet, filled to the rim, lifted and the diameter of the resulting circle is determined after 20 min.

Shore D and Shore A: see Example 7.

**Table 4:**

| | Sikafloor^{®} 40 HyCem | Sikafloor^{®} 42 HyCem | SR 81^{®} EpoCem | SR 21^{®} PurCem | Example 1 |
|---|---|---|---|---|---|
| Compressive strength [N/mm²] | 20 | 25 | 60 | 55 | 30 |
| Flexural strength [N/mm²] | 8 | 8 | 14 | 17 | 15 |
| Bond strength [N/mm²] | 1 | 1.5 | 3.5 | 3 | 2.5 |
| Taber abrasion H22 [g] | 10 | 10 | 800 | 800 | 1000 |
| Impact resistance [N] | 8 | 8 | 10 | 10 | 10 |
| Tensile strength [N] | 4.7 | 4.6 | 5 | 8 | 11 |
| Extension [%] | 1.5 | 1.7 | 0.4 | 0.5 | 4 |
| Crack bridging resistance (mm) | 0,25 | 0,25 | 0,15 | 0,15 | 0,45 |
| Working time [min] | 60 | 70 | 90 | 20 | 60 |
| Workability (20 min) [mm] | 350 | 300 | 310 | 310 | 350 |
| Shore D | 49 | 49 | 80 | 80 | 55 |

## Claims

1. Multi-component composition comprising
A) a polyol component (A) comprising one or more polyols and water,
B) a polyisocyanate component (B) comprising hexamethylene diisocyanate (HOI) and an isocyanate-functional polyurethane prepolymer of at least one polyol and methylene diphenyl diisocyanate (MDI), or
HDI and MDI,
wherein the HDI used is selected from monomeric HDI, HDI biurets, HDI isocyanurates, HDI trimer, allophanate derivatives of HDI, uretdione dimer of HDI or mixtures thereof, and
C) a powder component (C) comprising one or more hydraulic binding agents and one or more aggregates.

2. Multi-component composition according to claim 1, wherein component (B) further comprises a catalyst, wherein a catalyst containing tin is preferred.

3. Multi-component composition according to any of claims 1 or 2, wherein the MDI used in the combination of HDI and MDI or as starting material for the isocyanate-functional polyurethane prepolymer is a monomeric MDI or polymeric MDI or a mixture thereof, wherein monomeric MDI is preferred.

4. Multi-component composition according to any of claims 1 to 3, wherein the polyisocyanate component (B) comprises 80 to 100 % by weight of the combination of HDI and MDI or 80 to 100 % by weight of the combination of HDI and the isocyanate-functional polyurethane prepolymer.

5. Multi-component composition according to any of claims 1 to 4, wherein the weight ratio of HDI : MDI or HDI : isocyanate-functional polyurethane prepolymer in component (B) is from 10 : 90 to 90 : 10, preferably 30 : 70 to 70 : 30.

6. Multi-component composition according to any of claims 1 to 5, wherein
a) the content of the polyisocyanates is in the range of 5 to 40 % by weight, and/or
b) the content of the one or more hydraulic binding agent is in the range of 5 to 50 % by weight,
based on the total weight of component (A), component (B) and component (C).

7. Multi-component composition according to any of claims 1 to 6, wherein component (C) comprises
a) 20 to 50 % by weight of one or more hydraulic binding agent, and
b) 40 to 80 % by weight of aggregates, preferably sand,
based on the total weight of component (C).

8. Multi-component composition according to any of claims 1 to 7, wherein the weight ratio of the three components (A) : (8) : (C) is 1-1.2 : 1-0.85 : 1-5.

9. Multi-component composition according to any of claims 1 to 8, wherein at least one polyol of component (A) is a polyhydroxy-functional fat and/or oil or a polyol obtained by chemical modification of a natural fat and/or oil, wherein the polyol is preferably castor oil.

10. Multi-component composition according to any of claims 1 to 9, wherein the NCO equivalent weight of the isocyanate-functional polyurethane prepolymer is in the range of 180 to 1500 g/eq, preferably 200 to 1000 g/eq.

11. Method for the manufacture of a polyurethane cementitious hybrid flooring or coating with a multi-component composition according to any of claims 1 to 10, wherein the method comprises
a) mixing polyol component (A) and polyisocyanate component (B),
b) adding the powder component (C) to the mixture of polyol component (A) and polyisocyanate component (B), and mixing to obtain a mixed material,
c) applying the mixed material to a substrate,
d) optionally smoothing the applied mixed material, and
e) curing the applied mixed material, to obtain the polyurethane cementitious hybrid flooring or coating.

12. Flooring obtainable by the method according to claim 11, preferably an industrial floor or a car park floor.

13. Use of the multi-component composition according to any of claims 1 to 10 as a flooring material for car park floors or industrial floors.

## Patentansprüche

1. Mehrkomponentige Zusammensetzung, umfassend
A) eine Polyolkomponente (A), umfassend ein oder mehrere Polyole und Wasser,
B) eine Polyisocyanatkomponente (B), umfassend Hexamethylendiisocyanat (HDI) und ein isocyanatfunktionelles Polyurethanprepolymer von mindestens einem Polyol und Methylendiphenyldiisocyanat (MDI) oder
HDI und MDI,
wobei das verwendete HDI aus monomerem HDI, HDI-Biureten, HDI-Isocyanuraten, HDI-Trimer, Allophanatderivaten von HDI, Uretdiondimer von HDI oder Mischungen davon ausgewählt ist, und
C) eine Pulverkomponente (C), umfassend ein oder mehrere hydraulische Bindemittel und einen oder mehrere Zuschlagstoffe.

2. Mehrkomponentige Zusammensetzung nach Anspruch 1, wobei Komponente (B) ferner einen Katalysator umfasst, wobei ein Zinn enthaltender Katalysator bevorzugt ist.

3. Mehrkomponentige Zusammensetzung nach Anspruch 1 oder 2, wobei das in der Kombination von HDI und MDI oder als Ausgangsstoff für das isocyanatfunktionelle Polyurethanprepolymer verwendete MDI ein monomeres MDI oder polymeres MDI oder eine Mischung davon ist, wobei monomeres MDI bevorzugt ist.

4. Mehrkomponentige Zusammensetzung nach einem der Ansprüche 1 bis 3, wobei die Polyisocyanatkomponente (B) 80 bis 100 Gew.-% der Kombination von HDI und MDI oder 80 bis 100 Gew.-% der Kombination von HDI und dem isocyanatfunktionellen Polyurethanprepolymer umfasst.

5. Mehrkomponentige Zusammensetzung nach einem der Ansprüche 1 bis 4, wobei das Gewichtsverhältnis von HDI : MDI bzw. HDI : isocyanatfunktionellem Polyurethanprepolymer in Komponente (B) 10: 90 bis 90 : 10, vorzugsweise 30 : 70 bis 70 : 30, beträgt.

6. Mehrkomponentige Zusammensetzung nach einem der Ansprüche 1 bis 5, wobei
a) der Gehalt der Polyisocyanate im Bereich von 5 bis 40 Gew.-% liegt und/oder
b) der Gehalt des einen oder der mehreren hydraulischen Bindemittel im Bereich von 5 bis 50 Gew.-% liegt,
bezogen auf das Gesamtgewicht von Komponente (A), Komponente (B) und Komponente (C).

7. Mehrkomponentige Zusammensetzung nach einem der Ansprüche 1 bis 6, wobei Komponente (C)
a) 20 bis 50 Gew.-% eines oder mehrerer hydraulischer Bindemittel und
b) 40 bis 80 Gew.-% Zuschlagstoffe, vorzugsweise Sand,
bezogen auf das Gesamtgewicht von Komponente (C), umfasst.

8. Mehrkomponentige Zusammensetzung nach einem der Ansprüche 1 bis 7, wobei das Gewichtsverhältnis der drei Komponenten (A) : (B) : (C) 1-1,2 : 1-0,85 : 1-5 beträgt.

9. Mehrkomponentige Zusammensetzung nach einem der Ansprüche 1 bis 8, wobei es sich bei mindestens einem Polyol von Komponente (A) um ein polyhydroxyfunktionelles Fett und/oder Öl oder ein durch chemische Modifizierung eines natürlichen Fettes und/oder Öls erhaltenes Polyol handelt, wobei es sich bei dem Polyol vorzugsweise um Rizinusöl handelt.

10. Mehrkomponentige Zusammensetzung nach einem der Ansprüche 1 bis 9, wobei das NCO-Äquivalentgewicht des isocyanatfunktionellen Polyurethanprepolymers im Bereich von 180 bis 1500 g/eq, vorzugsweise 200 bis 1000 g/eq, liegt.

11. Verfahren zur Herstellung eines Polyurethan-Zement-Hybrid-Bodenbelags oder -Überzugs mit einer mehrkomponentigen Zusammensetzung nach einem der Ansprüche 1 bis 10, wobei das Verfahren Folgendes umfasst:
a) Mischen von Polyolkomponente (A) und Polyisocyanatkomponente (B),
b) Zugeben der Pulverkomponente (C) zu der Mischung von Polyolkomponente (A) und Polyisocyanatkomponente (B) und Mischen zum Erhalt eines gemischten Materials,
c) Aufbringen des gemischten Materials auf ein Substrat,
d) gegebenenfalls Glätten des aufgebrachten gemischten Materials und
e) Härten des aufgebrachten gemischten Materials zum Erhalt des Polyurethan-Zement-Hybrid-Bodenbelags oder -Überzugs.

12. Bodenbelag, der durch das Verfahren nach Anspruch 11 erhältlich ist, vorzugsweise ein Industrieboden oder ein Parkplatzboden.

13. Verwendung der mehrkomponentigen Zusammensetzung nach einem der Ansprüche 1 bis 10 als Bodenbelagsmaterial für Parkplatzböden oder Industrieböden.

## Revendications

1. Composition à plusieurs composants comprenant
A) un composant polyol (A) comprenant un ou plusieurs polyols et de l'eau,
B) un composant polyisocyanate (B) comprenant du diisocyanate d'hexaméthylène (HDI) et un prépolymère de polyuréthane fonctionnalisé par isocyanate d'au moins un polyol et de diisocyanate de diphénylméthylène (MDI), ou
HDI et MDI,
le HDI utilisé étant choisi parmi un HDI monomérique, des HDI biurets, des HDI isocyanurates, un trimère de HDI, des dérivés d'allophanate de HDI, un dimère d'uretdione de HDI ou des mélanges correspondants, et
C) un composant en poudre (C) comprenant un ou plusieurs agents liants hydrauliques et un ou plusieurs agrégats.

2. Composition à plusieurs composants selon la revendication 1, le composant (B) comprenant en outre un catalyseur, un catalyseur contenant de l'étain étant préféré.

3. Composition à plusieurs composants selon l'une quelconque des revendications 1 ou 2, le MDI utilisé dans la combinaison de HDI et MDI ou en tant que matière de départ pour le prépolymère de polyuréthane fonctionnalisé par isocyanate étant un MDI monomérique ou un MDI polymérique ou un mélange correspondant, un MDI monomérique étant préféré.

4. Composition à plusieurs composants selon l'une quelconque des revendications 1 à 3, le composant polyisocyanate (B) comprenant 80 à 100 % en poids de la combinaison de HDI et MDI ou 80 à 100 % en poids de la combinaison de HDI et du prépolymère de polyuréthane fonctionnalisé par isocyanate.

5. Composition à plusieurs composants selon l'une quelconque des revendications 1 à 4, le rapport en poids de HDI : MDI ou HDI : prépolymère de polyuréthane fonctionnalisé par isocyanate dans le composant (B) étant de 10 : 90 à 90 : 10, préférablement 30 : 70 à 70 : 30.

6. Composition à plusieurs composants selon l'une quelconque des revendications 1 à 5,
a) la teneur des polyisocyanates étant dans la plage de 5 à 40 % en poids, et/ou
b) la teneur de l'agent ou des agents liants hydrauliques étant dans la plage de 5 à 50 % en poids,
sur la base du poids total du composant (A), du composant (B) et du composant (C).

7. Composition à plusieurs composants selon l'une quelconque des revendications 1 à 6, le composant (C) comprenant
a) 20 à 50 % en poids de l'agent ou des agents liants hydrauliques, et
b) 40 à 80 % en poids d'agrégats, préférablement du sable,
sur la base du poids total du composant (C).

8. Composition à plusieurs composants selon l'une quelconque des revendications 1 à 7, le rapport en poids des trois composants (A) : (B) : (C) étant de 1 à 1,2 : 1 à 0,85 : 1 à 5.

9. Composition à plusieurs composants selon l'une quelconque des revendications 1 à 8, au moins un polyol du composant (A) étant une graisse et/ou une huile fonctionnalisée par polyhydroxy ou un polyol obtenu par modification chimique d'une graisse et/ou d'une huile naturelle, le polyol étant préférablement l'huile de ricin.

10. Composition à plusieurs composants selon l'une quelconque des revendications 1 à 9, le poids d'équivalents de NCO du prépolymère de polyuréthane fonctionnalisé par isocyanate étant dans la plage de 180 à 1 500 g/éq, préférablement 200 à 1 000 g/éq.

11. Procédé pour la fabrication d'un plancher ou revêtement hybride cimentaire de polyuréthane avec une composition à plusieurs composants selon l'une quelconque des revendications 1 à 10, le procédé comprenant
a) le mélange du composant polyol (A) et du composant polyisocyanate (B),
b) l'ajout du composant en poudre (C) au mélange du composant polyol (A) et du composant polyisocyanate (B), et le mélange pour obtenir un matériau mélangé,
c) l'application du matériau mélangé sur un substrat,
d) éventuellement le lissage du matériau mélangé appliqué, et
e) le durcissement du matériau mélangé appliqué, pour obtenir le plancher ou le revêtement hybride cimentaire de polyuréthane.

12. Plancher pouvant être obtenu par le procédé selon la revendication 11, préférablement un sol industriel ou un sol de parking pour voitures.

13. Utilisation de la composition à plusieurs composants selon l'une quelconque des revendications 1 à 10 en tant que matériau de plancher pour des sols de parking pour voitures ou des sols industriels.
